# FASCICULE DE BREVET EUROPEEN

(11) **EP 3 688 349 B1**
(45) Date de publication et mention de la délivrance du brevet: **25.03.2026**
(21) Numéro de dépôt: 18774024.6
(22) Date de dépôt: 21.09.2018
(51) Int. Cl.: F16K 21/10, E03D 3/04, E03C 1/04

(54) **ROBINET MITIGEUR TEMPORISÉ MONOCOMMANDE**
ÜBER EINZELHEBELZEIT GESTEUERTE MISCHARMATUR
SINGLE-LEVER TIMED MIXER TAP

(30) Priorité: 28.09.2017 FR 1771031
(43) Date de publication de la demande: 05.08.2020
(73) Titulaire: Les Robinets Presto, 92120 Montrouge (FR)
(72) Inventeur: CHAUVEAU, Stéphane, 17110 Saint-Georges-de-Didonne (FR); GRANSEIGNE, Laurent, 17110 Saint-Georges-de-Didonne (FR); BACQUET, Grégory, 17110 Saint-Georges-de-Didonne (FR)
(74) Mandataire: Eidelsberg, Olivier Nathan
(86) Numéro de dépôt international: PCT/EP2018/075663
(87) Numéro de publication internationale: WO 2019/063439

(56) Documents cités:
- EP-A1- 2 998 622
- WO-A1-2015/043080
- DE-U1- 29 608 014
- DE-U1- 29 915 433
- DE-U1- 29 915 433

## Description

La présente invention se rapporte à un robinet mitigeur temporisé mono commande.

Un robinet mitigeur temporisé comporte classiquement un bouton poussoir permettant de commander le passage de l'eau entre au moins une entrée pour l'alimentation d'eau, notamment deux entrées respectivement en eau chaude et en eau froide, et au moins une sortie pour l'eau mitigée. Entre la ou les entrées et la sortie, sont disposés un bloc mitigeur ayant une partie mobile en rotation par rapport à une partie fixe, par exemple un boisseau, la rotation permettant de faire varier les sections respectives d'entrée d'eau chaude et d'eau froide, et une cartouche de temporisation, par exemple une cartouche de temporisation dite à membrane.

Ces robinets mitigeurs temporisés connus, en raison de leur double fonctionnalité, sont volumineux et de structure compliquée, et la présente invention vise à surmonter ces inconvénients en proposant un robinet de ce genre qui soit plus compact et de structure plus simple.

Suivant l'invention, le robinet mitigeur temporisé mono commande est tel que défini à la revendication 1. En prévoyant ainsi ce double mouvement et cette double transmission en translation et en rotation du bouton poussoir vis-à-vis respectivement de la tige d'actionnement de la cartouche de la temporisation et du bloc mitigeur disposés l'une à la suite de l'autre, on obtient un robinet mitigeur temporisé particulièrement fonctionnel, et notamment mono commande, la commande de la température et du débit s'effectuant par l'intermédiaire du seul bouton poussoir.

En outre, on évite la transmission de la translation au bloc mitigeur, cette transmission étant absorbée par la cartouche de temporisation ce qui donne un système plus compact et la possibilité, si on le souhaite, d'ajouter des moyens pour régler des butées de température en haut du produit et/ou permettre l'accès au réglage de la temporisation.

De préférence, pour obtenir un robinet particulièrement compact, la cartouche de temporisation est disposée entre le bouton poussoir et le bloc mitigeur.

Suivant un mode de réalisation préféré de l'invention, la cartouche de temporisation est reçue au moins en partie, et notamment sensiblement complètement, à l'intérieur de l'organe de transmission.

En particulier, l'organe de transmission est un cylindre creux, notamment traversé par la tige d'actionnement de la cartouche de temporisation.

Suivant un mode de réalisation préféré de l'invention, le bloc mitigeur, la cartouche de temporisation, le bouton poussoir et l'organe de transmission, notamment sous la forme d'un cylindre creux, sont alignés, notamment suivant l'axe de la tige d'actionnement.

Suivant un mode de réalisation préféré de l'invention, le bloc mitigeur est un sous-ensemble dit thermostatique.

Suivant l'invention, on entend par le fait que le bloc mitigeur et la cartouche de temporisation sont montés indépendants l'un de l'autre, le fait que si l'on retire l'un ou l'autre des deux éléments, notamment la cartouche de temporisation, l'autre élément, notamment le bloc mitigeur, continue de fonctionner.

Ainsi, par exemple dans EP 2 998 622, le bloc mitigeur 56, 57 et la cartouche de temporisation 40 ne sont pas montés de manière indépendante l'un de l'autre, puisque si l'on retire la tige 12 d'actionnement de la cartouche de temporisation, plus rien n'actionne le bloc mitigeur 56, 57.

De même dans DE 299 15 433, le bloc mitigeur 18 et la cartouche de temporisation 14 ne sont pas montés indépendants l'un de l'autre. Si l'on retire la cartouche 14, il n'y a plus de liaison entre le bouton poussoir 89 et le bloc mitigeur et ce dernier ne peut plus fonctionner.

A titre d'exemple, on décrit maintenant un mode de réalisation préféré de l'invention en se reportant aux dessins dans lesquels :
- La figure 1: est une vue en coupe longitudinale d'un robinet mitigeur temporisé suivant l'invention comportant un bloc mitigeur dit thermostatique ;
- La figure 2: est une vue en coupe longitudinale d'un autre mode de réalisation d'un robinet mitigeur temporisé suivant l'invention comportant une bloc mitigeur dit à disque céramique ;
- Les figures 3A à 3D: représentent l'élément formant cartouche temporisée utilisé dans les modes de réalisation des modes de réalisation des figures 1 et 2 ; et

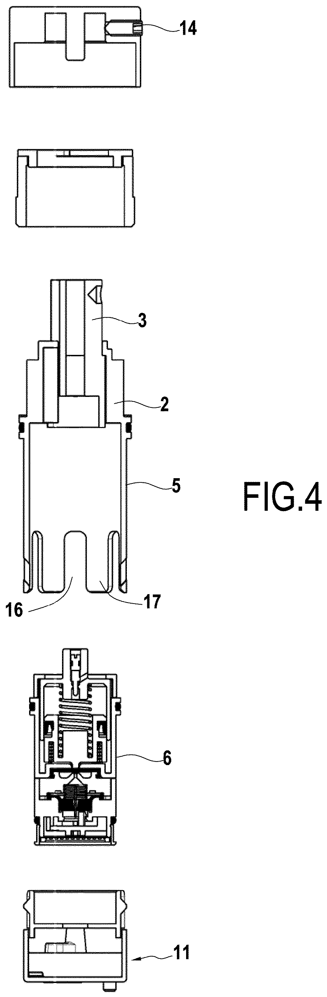

- La figure 4: est une vue en coupe éclatée du mode de réalisation représenté à la figure 2.

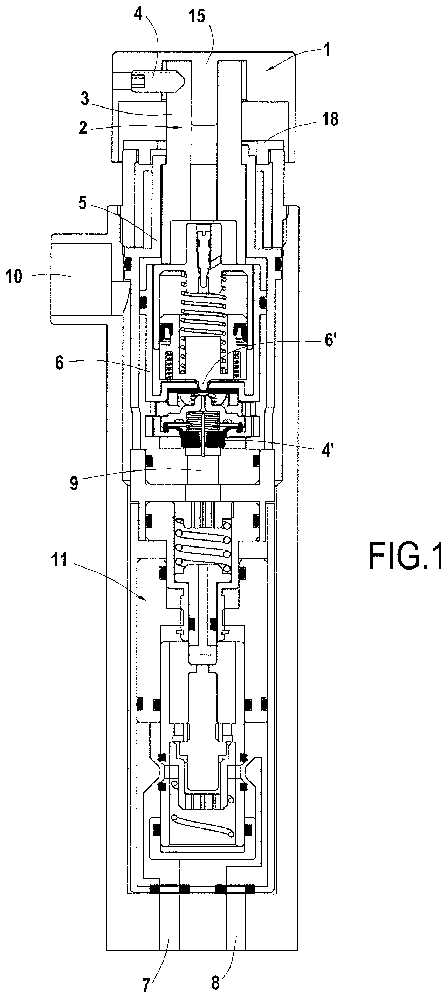

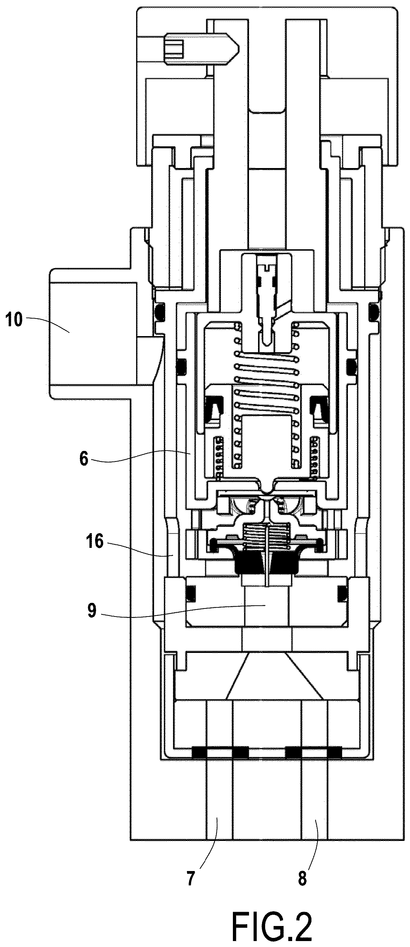

Aux figures 1 et 2, il est représenté deux modes de réalisation d'un robinet mitigeur temporisé suivant l'invention. A la figure 1, le bloc mitigeur est constitué d'un élément dit thermostatique, tandis qu'à la figure 2 le bloc mitigeur est constitué d'un élément dit à plaque céramique, ou bloc frotteur.

A l'exception de cette différence concernant le type de bloc mitigeur, les deux modes de réalisation sont semblables et les parties et pièces communes aux deux modes de réalisation portent les mêmes références numériques.

Les robinets mitigeurs temporisés représentés aux figures comportent une partie supérieure constituant un bouton poussoir 1. Ce bouton poussoir 1, de forme sensiblement cylindrique circulaire, coopère avec un élément 2 de transmission ayant une partie 3 supérieure en forme de tige solidarisée au bouton poussoir par l'intermédiaire d'une vis 4 de blocage et une partie 5 inférieure en forme de cylindre creux définissant un espace intérieur destiné à permettre au cylindre de coiffer une cartouche 6 de temporisation.

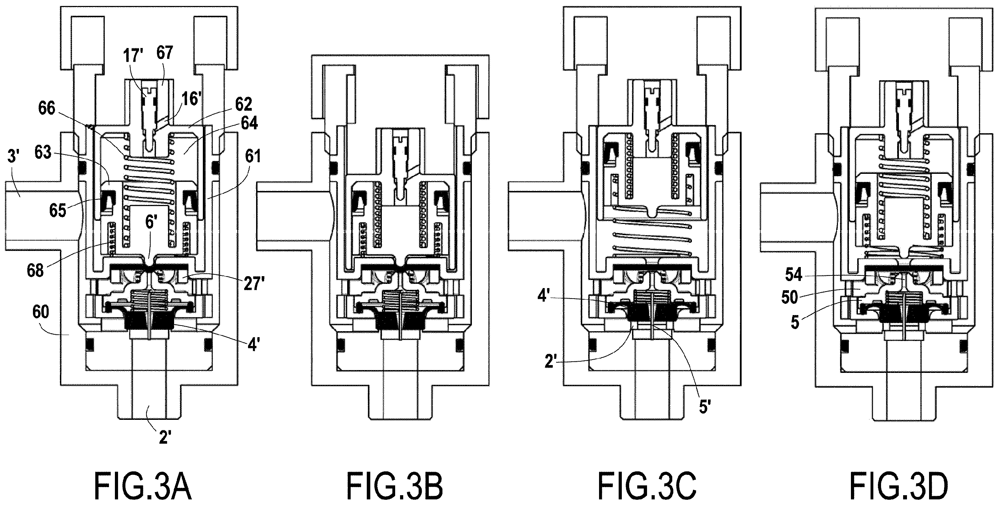

La cartouche 6 de temporisation est représentée notamment dans son fonctionnement aux figures 3A à 3D. Il convient de noter cependant que tout autre type de cartouche de temporisation pourrait être utilisée.

La cartouche 6 de temporisation est disposée entre le bouton poussoir et le bloc 11 mitigeur thermostatique à la figure 1, respectivement le bloc 11' mitigeur à disque céramique à la figure 2.

La cartouche 6 de temporisation et le bloc mitigeur 11, respectivement 11', sont montés indépendamment l'un de l'autre, et notamment on peut les dissocier, par exemple retirer le bloc mitigeur sans que le robinet ne cesse de fonctionner, certes sans fonction de mitigeage. Les deux éléments (cartouche 6 et bloc 11 ou 11') ne sont pas imbriqués l'un dans l'autre et fonctionnent indépendamment l'un de l'autre.

Le robinet comporte deux entrées d'eau 7 et 8, respectivement pour l'eau froide et l'eau chaude. Après passage de l'eau froide et de l'eau chaude issue des entrées 7 et 8 dans le bloc mitigeur 11, respectivement 11', l'eau mitigée est délivrée à la sortie 10 du bloc mitigeur vers la sortie 9. Lorsque l'obturateur 4' principal de la cartouche de temporisation se trouve dans son siège, l'eau est empêchée de sortir de la sortie 10 vers la sortie 9. Lorsque l'utilisateur appuie sur la surface 15 supérieure du bouton poussoir 1, ce dernier entraîne en translation la tige 3 qui est elle-même solidaire du plongeur 6' d'actionnement de la cartouche de temporisation, ce qui a pour effet, une fois que l'utilisateur a relâché la pression sur le bouton 1, d'ouvrir le siège dans lequel se trouve l'obturateur 4' principal, de permettre à l'eau mitigée d'être délivrée par la sortie 9 d'eau mitigée.

Le bouton 1 est monté également rotatif suivant un axe parallèle à sa direction de déplacement en translation et est relié au cylindre 5 de manière à l'entraîner en rotation. Ce dernier, quant à lui, est relié à la partie mobile du bloc mitigeur, de manière, dans le cas du mode de réalisation de la figure 2, à régler les sections relatives des entrées 7 et 8 respectivement d'eau chaude et d'eau froide et régler ainsi la température de l'eau mitigée sortant à la sortie 9, et dans le cas du mode de réalisation de la figure 1 à régler l'élément du bloc mitigeur 11' agissant sur la température. On obtient ainsi un robinet mitigeur temporisé mono-commande thermostatique.

Le bord inférieur du cylindre 5 est échancré de manière à comporter des fentes 16 et des promontoires 17 en alternance, les promontoires 17 assurant la solidarisation en rotation du cylindre avec la partie mobile du bloc mitigeur, tout en permettant à l'eau mitigée sortant par la sortie 10 du bloc mitigeur de passer vers la sortie 9 du robinet.

D'autre part, une bague 18 assure une limitation de la rotation du bouton 1 et donc du cylindre 5, pour maintenir cette rotation dans une plage correspondant à un domaine de température de l'eau mitigée qui soit acceptable pour une utilisation normale, sans danger pour l'utilisateur.

Aux figure 3A à 3D, il est représenté les différentes étapes du fonctionnement de la cartouche de temporisation.

La cartouche 6 de temporisation représentée comporte un corps 60 principal sensiblement cylindrique circulaire. Le corps principal 60 comporte à son extrémité inférieure une ouverture 2' d'arrivée ou d'alimentation en eau, des ouvertures 3' radiales de sortie étant disposées également à la partie inférieure du corps. Un obturateur 4' principal sous la forme d'une membrane comportant un fil frein 5' est reçu dans un siège formé dans l'ouverture 2'.

Dans la partie supérieure du corps principal 60 est reçu un premier bloc 61 supérieur sensiblement cylindrique circulaire ou tubulaire dans lequel est disposé un élément 62 tubulaire supérieur, ouvert dans le fond et pouvant coulisser dans le sens vertical à l'intérieur du premier bloc 61, et un élément 63 tubulaire inférieur pouvant coulisser dans l'élément 62 tubulaire supérieur le long de sa paroi intérieure de manière à définir entre les deux éléments une chambre de temporisation 64 dont le volume varie en fonction du coulissement relatif des deux éléments 62 et 63. Un clapet en forme de joint 65 à lèvre disposé entre les deux éléments en étant solidaire de l'élément 63 inférieur assure l'étanchéité de la chambre 64 lorsqu'elle est pleine et permet sa vidange lorsque l'air est poussé vers le bas.

Un élément 67 poussoir s'étend de la paroi supérieure de l'élément 62 supérieur en traversant la paroi supérieure du bloc 60 et en faisant saillie hors du corps principal.

Un ressort 66 supérieur prend appui entre la paroi supérieure de l'élément 62 et la paroi de fond de l'élément 63 inférieur. Lorsque la chambre 64 a son volume maximum (figure 3A), le ressort est à l'état non comprimé ou de repos.

Un ressort 68 inférieur prend appui entre la paroi de fond de l'élément 63 inférieur et la paroi de fond du bloc 61. Lorsque la chambre 64 a son volume maximum (figure 3A), le ressort est à l'état comprimé.

Un plongeur 6' s'étend de la paroi de fond de l'élément 63 tubulaire inférieur et traverse la paroi de fond du bloc 61. Une membrane 27', notamment en matériau élastomère imperméable, est disposée en face du trou de traversée pour le plongeur 6' de la paroi de fond du bloc 61, en étant plaquée contre la face inférieure du bloc 61. Elle pourrait, sans que cela soit nécessaire, être fixée, par exemple par soudure, collage ou analogue, le long de son bord périphérique à la face inférieure du bloc 61. Lorsque le plongeur 6' est poussé hors du bloc 61, il vient porter contre la membrane 27' et en éloigner la partie centrale de la paroi de fond du bloc 61.

Il est également disposé dans le corps 60 principal de la cartouche un bloc 70 inférieur de forme sensiblement cylindrique qui définit des entrée et sorties du fluide d'alimentation ainsi que le siège principal de l'obturateur 4'.

Entre les deux blocs supérieur et inférieur, il est formé un espace 50 intérieur dans lequel est reçu un élément annulaire 51, comportant un canal 54 central vertical le traversant de part en part. L'espace 50 intérieur est divisé, par l'interposition de l'élément 51 annulaire, en deux sous espaces respectivement supérieur et inférieur en communication pour les fluides par le canal 54 central. La sortie supérieure du canal 54 vertical se trouve en face de la partie centrale de la membrane 27' et du plongeur 6'.

Le fonctionnement de la cartouche des figures 3A à 3D est le suivant.

Dans la position représentée à la figure 3A, l'obturateur ou membrane 4' principal est dans son siège et empêche le passage du fluide d'alimentation de l'ouverture d'entrée vers les ouvertures de sortie latérales. La chambre 64 de temporisation est remplie de fluide de temporisation (de l'air ici) de sorte que le plongeur 6' est maintenu vers le bas et presse la membrane 27' contre le bord de l'ouverture supérieure du canal 54, empêchant ainsi le fluide d'alimentation présent dans le sous espace inférieur de passer dans le sous espace supérieur de l'espace 50 malgré la pression du fluide à l'entrée 2'. Le sous espace inférieur est totalement empli du fluide d'alimentation par l'intermédiaire du fil frein 5', la pression du fluide pressant la membrane 4' dans son siège. L'élément poussoir 67 n'est pas pressé vers le bas et fait saillie hors du corps principal 60 et du bloc 61. L'effort du ressort 66 contenu dans la chambre 64 de temporisation principale est supérieure à la force exercée par le ressort 68 comprimé.

A la figure 3B, l'utilisateur a pressé l'élément 67 poussoir. L'air contenu dans la chambre 64 de temporisation a été chassé vers le bas au niveau de l'extrémité périphérique inférieure de la lèvre du joint 65 à lèvre, puis renvoyé vers haut le long des parois latérales entre les parois du bloc 61 supérieur et celle de l'élément 62 tubulaire pour ressortir par l'ouverture supérieure du bloc 61. La chambre 64 de temporisation initialement remplie d'air s'est vidée et le ressort 66 supérieur est comprimé sous l'action de la poussée de l'utilisateur. Le plongeur 6' continue de presser sur la membrane 27'. Ainsi, tant que l'utilisateur maintient la pression sur l'élément 67 poussoir, le robinet reste fermé, l'ouverture pour le passage du fluide d'alimentation ne pouvant avoir lieu qu'après relâchement de la pression sur l'élément 67.

A la figure 3C, l'utilisateur a relâché la pression sur l'élément poussoir 67. Le ressort 68 inférieur comprimé n'ayant plus en opposition l'effort du ressort 66 (qui reste comprimé en raison de la dépression dans la chambre de temporisation) de la chambre 64 à supporter entraîne la remontée des deux éléments tubulaires 62 et 63 supérieur et inférieur, et par conséquent une remontée du plongeur 6' qui sort ainsi de son contact avec la membrane 27'. Il en résulte une remontée de la partie centrale de la membrane 27' et l'ouverture du canal 54 vers le haut. Le fluide d'alimentation qui se trouvait jusqu'à maintenant bloqué à la sortie du canal 54 peut passer dans le sous espace supérieur et s'évacuer par des sorties latérales de ce sous espace. Il en résulte une diminution de la pression exercée par l'eau du sous espace inférieur sur la membrane principale 4' qui, sous l'effet de l'eau entrant par l'entrée 2' se soulève et permet un passage du fluide d'alimentation (l'eau) vers les sorties 3' latérales. Dans le même temps, le ressort 66 supérieur a été comprimé et la chambre 64 reste vide. Cependant, de l'air commence à pénétrer de nouveau par le haut par des orifices 16' à clapet appropriés formés dans l'élément 67 poussoir et dont la section peut être réglée par une tige 17' de réglage.

Au fur à mesure que de l'air ou fluide de temporisation emplit de nouveau la chambre 64, l'élément tubulaire 63 inférieur, sous l'effet de la pression de l'air et du ressort 66 supérieur comprimé, redescend, entraînant avec lui le plongeur 6' (figure 3D) jusqu'à ce que ce dernier vienne presser la membrane 27' contre le bord de la sortie du canal 54, ce qui a pour effet d'augmenter la pression dans la partie supérieure de la membrane principale et ainsi presser de nouveau la membrane 4' principale de nouveau dans son siège pour bloquer le passage de l'eau entre l'entrée 2' et les sorties 3' (figure 3A).

Aux figures 3C et 3D, on peut voir que le fluide d'alimentation (l'eau), sort vers le haut, après avoir été rejoint par l'eau sortant du sous espace supérieur.

Suivant les modes de réalisation de l'invention décrits, même si l'on retire la cartouche de temporisation, le bloc mitigeur continue à être commandé par le bouton poussoir par l'extérieur.

## Revendications

1. Robinet mitigeur temporisé mono commande comportant un bouton poussoir (1) permettant de commander le passage de l'eau entre au moins une entrée pour l'alimentation d'eau, notamment deux entrées respectivement en eau chaude et en eau froide, et au moins une sortie pour l'eau mitigée, un bloc (11 ; 11') mitigeur ayant une partie mobile en rotation par rapport à une partie fixe pour faire varier la température de l'eau mitigée, et une cartouche (6) de temporisation, le bloc mitigeur et la cartouche de temporisation sont montés de manière indépendante l'un de l'autre et le bouton poussoir est monté mobile en translation et en rotation, et il est prévu au moins un organe (2, 5) de transmission du mouvement du bouton poussoir qui est agencé pour transmettre d'une part un mouvement en translation à une tige (6') d'actionnement de la cartouche de temporisation et d'autre part un mouvement en rotation à la partie mobile du bloc mitigeur,
**caractérisé en ce que** le bouton poussoir (1) de forme cylindrique circulaire, coopère avec un élément (2) de transmission ayant une partie (3) supérieure en forme de tige solidarisée au bouton poussoir par l'intermédiaire d'une vis (4) de blocage et une partie (5) inférieure en forme de cylindre creux définissant un espace intérieur destiné à permettre au cylindre de coiffer la cartouche (6) de temporisation.

2. Robinet suivant la revendication 1, **caractérisé en ce que** la transmission du mouvement en rotation s'effectue par l'extérieur de la cartouche (6) de temporisation.

3. Robinet suivant la revendication 1 ou 2, **caractérisé en ce que** le bloc mitigeur est un sous ensemble dit thermostatique.

4. Robinet suivant la revendication 1, 2 ou 3, **caractérisé en ce que** la cartouche de temporisation est disposée entre le bouton poussoir et le bloc mitigeur.

5. Robinet suivant l'une des revendications précédentes, **caractérisé en ce que** la cartouche de temporisation est reçue au moins en partie, et notamment sensiblement complètement, à l'intérieur de l'organe de transmission.

6. Robinet suivant l'une des revendications précédentes, **caractérisé en ce que** l'organe de transmission est un cylindre (5) creux, notamment traversé par la tige (6') d'actionnement de la cartouche de temporisation.

7. Robinet suivant l'une des revendications précédentes, **caractérisé en ce que** le bloc mitigeur, la cartouche de temporisation, le bouton poussoir et l'organe de transmission, notamment sous la forme d'un cylindre creux, sont alignés, notamment suivant l'axe de la tige d'actionnement.

## Patentansprüche

1. Über Einzelhebelzeit gesteuerte Mischarmatur umfassend eine Drucktaste (1), die die Steuerung des Wasserdurchgangs zwischen mindestens einem Einlass für die Wasserzufuhr, insbesondere zwei Einlässe jeweils für warmes Wasser und für kaltes Wasser, und mindestens einem Auslass für das Mischwasser ermöglicht, einen Mischblock (11; 11') mit einem drehbaren Teil in Bezug auf ein festes Teil, um die Temperatur des Mischwassers zu variieren, und eine zeitgesteuerte Kartusche (6), wobei der Mischblock und die zeitgesteuerte Kartusche unabhängig voneinander angebracht sind und die Drucktaste verschiebbar und drehbar angebracht ist, und mindestens ein Organ (2, 5) zur Übertragung der Bewegung der Drucktaste vorgesehen ist, das ausgelegt ist, um einerseits eine Verschiebungsbewegung auf eine Stange (6') zum Betätigen der zeitgesteuerten Kartusche und anderseits eine Drehbewegung auf das bewegliche Teil des Mischblocks zu übertragen,
**dadurch gekennzeichnet, dass** die kreiszylinderförmige Drucktaste (1) mit einem Element (2) zur Übertragung zusammenwirkt, das ein oberes stangenförmiges, mittels einer Feststellschraube (4) mit der Drucktaste fest verbundenes Teil (3) hat und ein unteres hohlzylinderförmiges Teil (5) hat, das einen Innenraum definiert, der dazu bestimmt ist, dem Zylinder zu ermöglichen, die zeitgesteuerte Kartusche (6) abzudecken.

2. Armatur nach Anspruch 1, **dadurch gekennzeichnet, dass** die Übertragung der Drehbewegung von aussen der zeitgesteuerten Kartusche (6) erfolgt.

3. Armatur nach Anspruch 1 oder 2, **dadurch gekennzeichnet, dass** der Mischblock eine sogenannte thermostatische Untereinheit ist.

4. Armatur nach Anspruch 1, 2 oder 3, **dadurch gekennzeichnet, dass** die zeitgesteuerte Kartusche zwischen der Drucktaste und dem Mischblock angeordnet ist.

5. Armatur nach einem der vorstehenden Ansprüche, **dadurch gekennzeichnet, dass** die zeitgesteuerte Kartusche mindestens teilweise, und insbesondere im Wesentlichen vollständig, im Inneren des Organs zur Übertragung aufgenommen ist.

6. Armatur nach einem der vorstehenden Ansprüche, **dadurch gekennzeichnet, dass** das Organ zur Übertragung ein Hohlzylinder (5) ist, durch den insbesondere die Stange (6') zum Betätigen der zeitgesteuerten Kartusche hindurchgeführt ist.

7. Armatur nach einem der vorstehenden Ansprüche, **dadurch gekennzeichnet, dass** der Mischblock, die zeitgesteuerte Kartusche, die Drucktaste und das Organ zur Übertragung, insbesondere in Form eines Hohlzylinders, ausgerichtet sind, und zwar insbesondere entlang der Achse der Stange zum Betätigen.

## Claims

1. Single-lever, timed mixer tap comprising a pushbutton (1) that makes it possible to control the passage of water between at least one water supply inlet, in particular two inlets for hot water and cold water respectively, and at least one outlet for the mixed water, a mixing block **(11;** 11') having a portion that is rotatably movable in relation to a stationary portion in order to vary the temperature of the mixed water, and a timer cartridge (6), the mixing block and the timer cartridge are mounted independently from one another and the pushbutton is mounted such that it is translatably and rotatably movable, and at least one member (2, 5) for transmitting the movement of the pushbutton is provided, this being designed to transmit, on one hand, a translational movement to an actuator rod (6') of the timer cartridge, and, on the other hand, a rotational movement to the movable portion of the mixing block,
**characterised in that** the pushbutton (1), of circular cylindrical shape, cooperates with a transmission element (2) having a stem shaped upper part (3), solidarized to the pushbutton via a blocking screw (4), and a hollow cylinder shaped lower part (5) defining an internal space for allowing said cylinder to cover the timing cartridge (6).

2. Tap according to claim 1, **characterised in that** the rotational movement is transmitted from the exterior of the timer cartridge (6).

3. Tap according to either claim 1 or claim 2, **characterised in that** the mixing block is a so-called thermostatic sub-assembly.

4. Tap according to any one of claims 1, 2 or 3, **characterised in that** the timer cartridge is arranged between the pushbutton and the mixing block.

5. Tap according to any one of the preceding claims, **characterised in that** the timer cartridge is received at least in part, and particularly substantially completely, inside the transmission member.

6. Tap according to any one of the preceding claims, **characterised in that** the transmission member is a hollow cylinder (5), especially traversed by the actuator rod (6') of the timer cartridge.

7. Tap according to any one of the preceding claims, **characterised in that** the mixing block, timer cartridge, pushbutton and transmission member, especially in the form of a hollow cylinder, are aligned, especially along the axis of the actuator rod.
